Europäisches Patentamt

European Patent Office

Office européen des brevets

(11) Publication number: **0 379 263**
**A1**

(12) **EUROPEAN PATENT APPLICATION**

(21) Application number: **90200143.7**

(22) Date of filing: **19.01.90**

(51) Int. Cl.⁵: **B65B 69/00, B65G 69/18**

(30) Priority: **20.01.89 NL 8900134**

(43) Date of publication of application:
**25.07.90 Bulletin 90/30**

(84) Designated Contracting States:
**AT BE CH DE DK ES FR GB GR IT LI LU NL SE**

(71) Applicant: **CEHAVE N.V.**
**Pater van den Elsenlaan 4**
**NL-5462 GG Veghel(NL)**

(72) Inventor: **Bracht Adrianus Jacob**
**De Scheifelaar 16**
**NL - 5463 HL Veghel(NL)**

(74) Representative: **Noz, Franciscus Xaverius, Ir.**
**et al**
**Algemeen Octrooibureau P.O. Box 645**
**NL-5600 AP Eindhoven(NL)**

(54) **Method of emptying a sack.**

㊗ The invention relates to a method of emptying a sack (1) in a receiving room (9), whereby material present in the sack is allowed to flow through a discharge opening (15) located near the bottom side of the sack into the upper part (12) of the receiving room. Thereby it is effected that near the upper part of the sack the upper part (12) of the receiving room (9) is in communication with the interior of the sack (1) via a line (16).

FIG.2.

## Method of emptying a sack.

The invention relates to a method of emptying a sack in a receiving room, whereby material present in the sack is allowed to flow through a discharge opening located near the bottom side of the sack into the upper part of the receiving room.

Bulk goods, which are used in relatively small quantities, are often dellivered to the user in sacks having a comparatively large volume, said sacks usually being placed on pallets for transport. Such sacks are at their upper side provided with carrying straps or the like, by means of which the sack can e.g. be suspended from the forks of a forklift truck in order to be placed above a receiving room, e.g. a silo or a feed hopper. At the bottom side of the sack there is a discharge hose which is opened after the sack has been correctly positioned above the receiving room, so that the material can flow out of the sack. A lot of dust is usually produced hereby, which not only causes a loss of material but also pollution of the surroundings and nuisance for the personnel.

The object of the invention is therefore to obtain a method of the above kind wherein the disadvantages mentioned can be prevented.

According to the invention this objective can be accomplished in that it is effected that near the upper part of the sack the upper part of the receiving room is in communication with the interior of the sack via a line. In this way it can be effected that the dust which is stirred up in the receiving room when the material is being deposited is sucked into the interior of the sack again via the line, so that any loss of material as well as nuisance for the surroundings is prevented.

The invention will be further explained hereafter with reference to the accompanying Figures.

Figure 1 diagrammatically shows a sack on a pallet, said sack having a large volume.

Figures 2 - 11 show successive stages of the method of emptying such a sack.

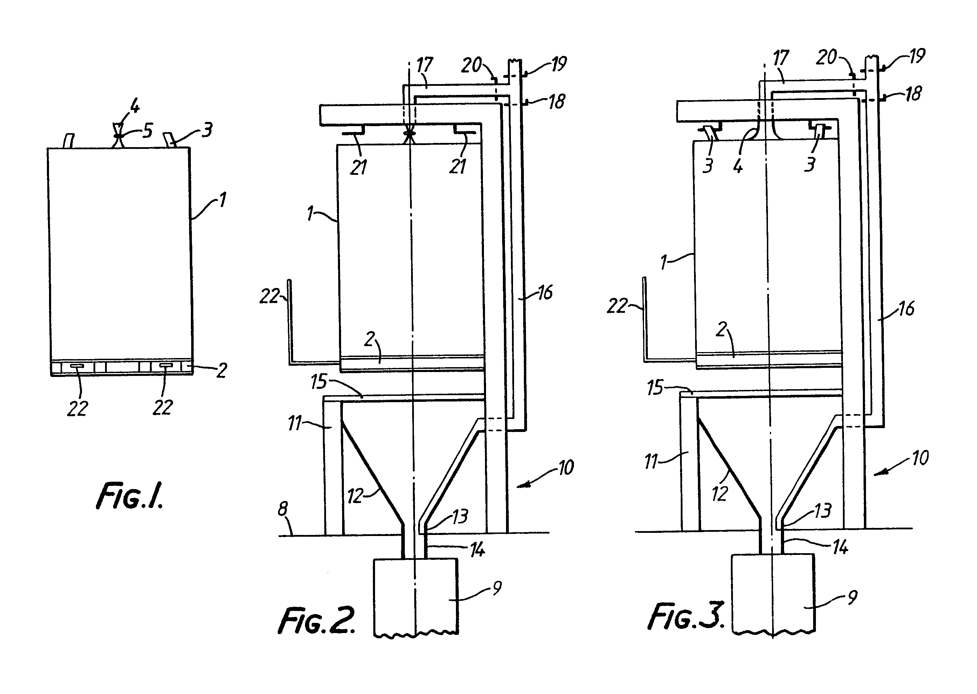

Figure 1 shows a sack 1 having a large volume and containing bulk goods, which sack is placed on a pallet 2. To the upper side of the sack there are attached straps 3, by means of which the sack can be suspended, e.g. from the forks of a forklift truck. The sack can be filled through a filling hose 4 provided at the upper side of the sack, which filling hose can be tied up by means of a string 5 or the like after the sack has been filled. The bottom side of the sack has a similar hose 6 (Figure 4), via which the sack can be emptied. Prior to filling said hose 6 will be tied up by means of a string 7 or the like, which string 7 can be removed in order to empty the sack, e.g. by cutting through said string 7.

For discharging such a sack in e.g. a receiving room, arranged under a floor 8, in the shape of a silo 9 or the like, use can be made according to the invention of a device 10, movable or not, which comprises a frame 11 with a hopper 12 accomodated in said frame. The lower end 13 of said hopper is thereby constructed such that it can be connected airtight to the upper end 14 of the silo 9, so that the hopper forms the upper part of the receiving room formed by the silo 9, as it were.

Near the upper end of the hopper there is provided a horizontally arranged diaphragm slide 15 which is made, in a similar manner as e.g. a camera shutter, of a plurality of diaphragm parts, whose ends directed towards each other define an opening which can be closed and opened more or less, as is desired, by said diaphragm parts moving forwards and backwards. A line 16 extends from the bottom end of the hopper 12, along the hopper wall and upwards along the frame 11. Near the upper end of the line 16 a branch line 17 is connected to said line 16, the end of said branch line 17 remote from the line 16 and deflected downwards being located at least substantially centrally above the hopper 12, when seen in plan view.

In the line 16, both under the connection of the branch line 17 and above said connection, there is provided a respective cut off valve 18 or 19. Further there has been provided a cut off valve 20 in the branch line 17.

Near the upper side of the frame 10 there are furthermore provided four hooks 21.

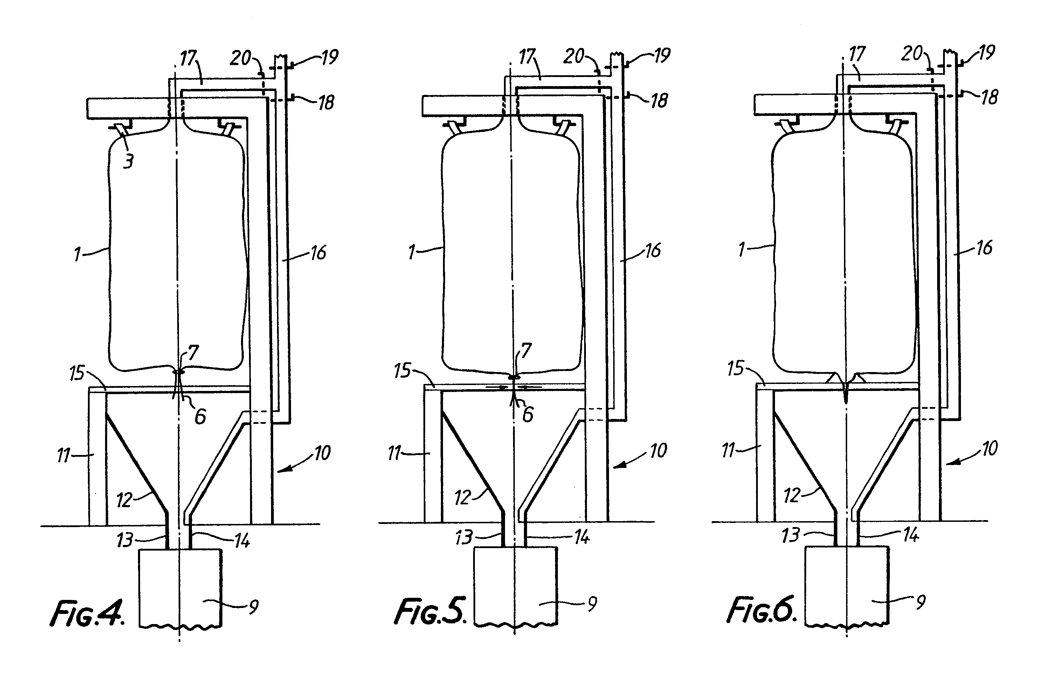

As is shown in the Figures 1 and 2 a sack 1 present on a pallet 2 can be picked up together with the pallet by the diagrammatically illustrated forks 22 of a forklift truck, which are known per se, and be arranged relative to the frame 10 in such a manner that the straps provided at the upper side of the sack 1 can be moved over the hooks 21, as is illustrated in Figure 3. After the sack 1 has been suspended from the frame 10 in this manner the pallet can be carried off by means of the forklift truck. Then the filling hose 4 will be opened by removing the string 5 or the like, and said filling hose will be secured around the deflected end of the branch line 17.

The diaphragm slide 15 is opened, after which the discharge hose 6 can be inserted into the opening of the diaphragm slide, as is illustrated in Figure 4. Then the diaphragm slide 15 will be closed again, as is shown in Figure 5, after which the string 7 or the like closing the discharge hose 6 can be removed (Figure 6).

Furthermore it is arranged that the valves 18 and 20 are open, whilst the valve 19 is closed.

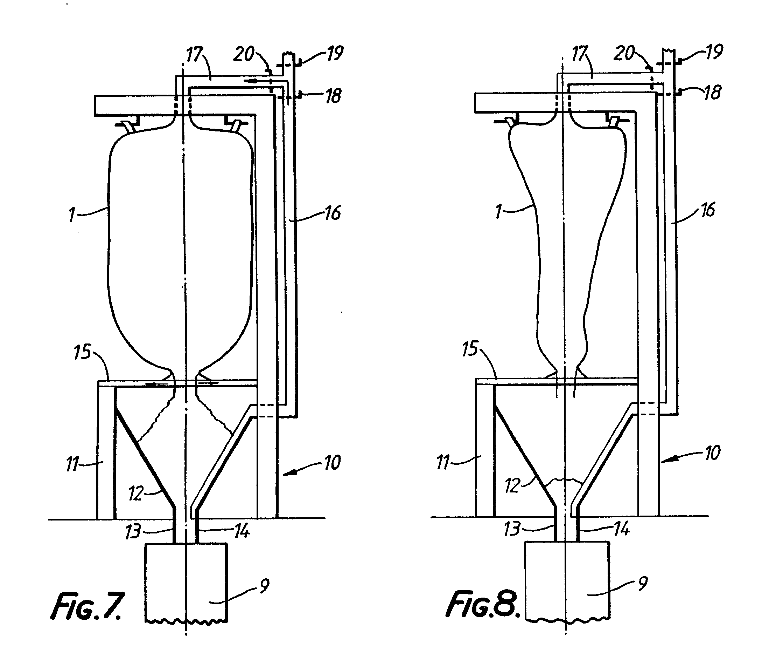

Then the diaphragm slide 15 can be opened again for the sack to be emptied (Figure 7), as a result of which the material can flow from the sack 1, via the discharge hose 6, into the hopper 12 forming the upper part of the receiving room (silo 9) (Figure 7). The material flowing out of the sack will thereby press the hose against the facing edges of the movable parts of the diaphragm slide 15, so that it is practically excluded that any dust escapes here, also because the dust-laden air is discharged again, via the line 16 and the branch line 17, to the interior of the sack 1 near the upper end of the sack 1, in which there is generated a sub-atmospheric pressure as a result of the outflow of the material. Because the dust is thus carried back toward the interior of the sack any loss of material and nuisance for the surroundings are prevented.

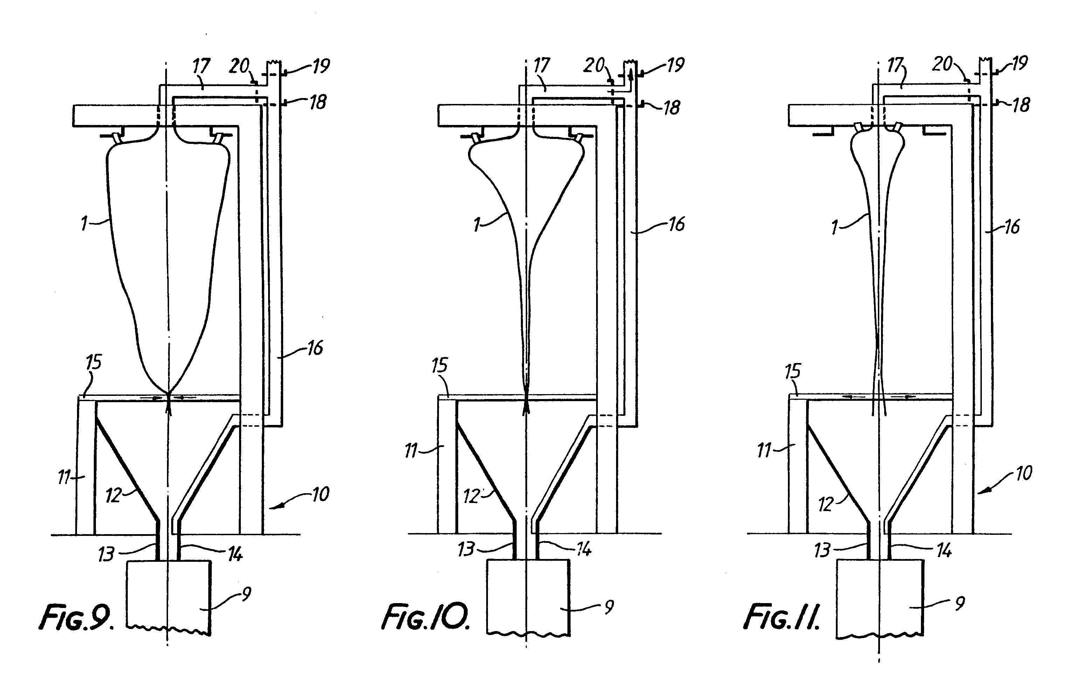

When the sack has become empty (Figure 8) any remnants can be removed from the sack by beating against the outer side of the sack by suitable means.

Then the diaphragm slide 15 will be closed again (Figure 9). Subsequently the valve 18 can be closed and the valve 19 can be opened, after which an exhaust system (not shown) connected to the upper end of the line 16 can be set into action, which exhaust device sucks in the air from the interior of the sack 1 via a filter casing (Figure 10). As a result of this the sack will become flat.

Then, after the diaphragm 15 has been opened, the emptied sack can be removed from the frame 10 and be folded (Figure 11).

## Claims

1. Method of emptying a sack in a receiving room, whereby material present in the sack is allowed to flow through a discharge opening located near the bottom side of the sack into the upper part of the receiving room, characterized in that it is effected that near the upper part of the sack the upper part of the receiving room is in communication with the interior of the sack via a line.

2. Method according to claim 1, characterized in that the discharge opening is connected, in a sealing manner, to the upper part of the receiving room.

3. Method according to claim 1 or 2, characterized in that after the sack has become empty the connection between the receiving room and the interior of the sack is broken, whilst the interior of the sack is connected to an exhaust system, which exhausts air from the sack via a filtering plant.

4. Device for carrying out the method according to any one of the preceding claims, characterized in that said device is provided with a frame having means for suspending the sack, a feed hopper to be connected to a receiving room and with a line which is in communication with the feed hopper, said line extending from said feed hopper to a location near the means for suspending the sack, where the line is provided with a connecting part for a hose of a sack.

5. Device according to claim 4, characterized in that the line is provided with a connection for being connected to an exhaust fan.

6. Device according to claim 4 or 5, characterized in that in the line there are provided valves for adjusting the air flow.

7. Device according to any one of claims 4-6 characterized in that the connecting part has been provided on a branch line having a cut off valve, whereby the branch line is connected to the line in a point situated between two further cut off valves mounted in said line.

8. Device according to any of the preceding claims 4-7 characterized in that the device is mobile.

FIG.1.

FIG.2.

FIG.3.

EP 0 379 263 A1

Fig.4.

Fig.5.

Fig.6.

Fig.7.

Fig.8.

*Fig.9.*

*Fig.10.*

*Fig.11.*

EP 0 379 263 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 252 489 (E. MECHALAS)<br>* Column 3, lines 20-44; fig. 5 *<br>--- | 1,2,3 | B 65 B 69/00<br>B 65 G 69/18 |
| Y | FR-A-2 212 281 (C. SCHENCK)<br>* Page 3, line 6 - page 4, line 25;<br>fig. *<br>--- | 1,2,3 | |
| Y | NL-A-7 606 677 (KIEKENS)<br>* Page 4, line 16 - page 5, line 29;<br>fig. * | 3 | |
| A | <br>--- | 5 | |
| A | AU-B- 523 116 (A. REA)<br>* Page 3, line 20 - page 5, line 10;<br>fig. *<br>--- | 1,2 | |
| A | US-A-2 811 178 (M. CUNNINGHAM)<br>----- | | |
| | | | TECHNICAL FIELDS SEARCHED (Int. Cl.5)<br><br>B 65 B<br>B 65 G |

The present search report has been drawn up for all claims

| Place of search | Date of completion of the search | Examiner |
|---|---|---|
| THE HAGUE | 09-04-1990 | JAGUSIAK A.H.G. |